# FASCICULE DE BREVET EUROPEEN

(11) **EP 3 551 418 B1**
(45) Date de publication et mention de la délivrance du brevet: **17.09.2025**
(21) Numéro de dépôt: 16815714.7
(22) Date de dépôt: 30.09.2016
(51) Int. Cl.: B29C 45/26, B29C 45/56

(54) **PROCEDE DE FABRICATION D'UN CATHETER URINAIRE, PAR MOULAGE PAR INJECTION D'UN MATERIAU THERMOPLASTIQUE DANS UN MOULE**
VERFAHREN ZUR HERSTELLUNG EINES HARNKATHETERS, DURCH SPRITZGIESSEN EINES THERMOPLASTISCHEN MATERIALS IN EINE FORM
METHOD FOR MANUFACTURING A URINARY CATHETER, BY INJECTION MOULDING A THERMOPLASTIC MATERIAL IN A MOULD

(43) Date de publication de la demande: 16.10.2019
(73) Titulaire: B.Braun Medical SAS, 92210 Saint-Cloud (FR)
(72) Inventeur: PREZELIN, Anthony, 28400 Nogent-le-Rotrou (FR); BLONDEAU, Romain, Hanoi (VN)
(74) Mandataire: August Debouzy
(86) Numéro de dépôt international: PCT/EP2016/001622
(87) Numéro de publication internationale: WO 2018/059652

(56) Documents cités:
- WO-A1-2013/127725
- WO-A1-2014/052770
- FR-A1- 2 255 161
- FR-A1- 2 311 650
- FR-A1- 2 594 742
- FR-A1- 3 034 342
- US-A- 2 443 053
- US-A1- 2002 190 430
- US-A1- 2005 112 309
- US-A1- 2014 323 981

## Description

La présente invention concerne un procédé de fabrication d'un cathéter urinaire, par moulage par injection d'un matériau thermoplastique dans un moule. Le document WO2014/052770A1 représente un état de l'art représentatif.

La fabrication de corps creux minces, allongés, comme par exemple de cathéters urinaires, dans un procédé de moulage par injection est difficile pour plusieurs raisons. Plusieurs points d'injection repartis sur la longueur du moule sont nécessaires pour injecter du matériau d'une manière fiable et régulière dans un moule mince et allongé. Par conséquent, on obtient une multitude de points d'injection qu'il convient de lisser avec soin. En particulier avec des pièces moulées par injection comme des cathéters urinaires, il existe un risque de blessure considérable si les points d'injection n'ont pas été ébarbés avec soin.

La situation est encore plus difficile avec des moules pour la fabrication d'un corps creux par moulage par injection. La cavité est produite par un noyau compromettant davantage la circulation de matériau à l'intérieur du moule et exige encore plus de points d'injection.

Le démoulage pose un autre problème. Les moules de moulage par injection sont pour cette raison réalisés habituellement en deux parties avec une division dans un plan qui renferme l'axe longitudinal du moule pour l'ouvrir après refroidissement du matériau injecté et pouvoir extraire la pièce moulée par injection. Des moules en deux parties produisent cependant des coutures sur la pièce moulée. Ces coutures doivent être ébarbées avec soin, notamment pour des cathéters urinaires fabriquées de cette manière pour éviter toute blessure.

Outre les risques liés à un ébavurage insuffisant, des coûts supplémentaires peuvent résulter de l'ébavurage et d'un contrôle étendu, occasionnant un surcoût significatif, notamment pour des produits jetables comme des cathéters urinaires. Des pièces allongées et cylindriques moulées par injection sent délicates à dégager de moules sans plan de séparation longitudinale. Si elles sont creuses par une broche introduite dans le moule, il est également difficile de démouler la pièce de la broche. Pour faciliter le démoulage, de telles pièces sont habituellement légèrement coniques. Avec des cathéters assez longs, le résultat est que le diamètre est manifestement accru sur la longueur du cathéter.

Le but de la présente invention consiste à proposer un procédé de fabrication d'un cathéter urinaire, dans un procédé de moulage par injection permettant une bonne répartition du matériau à l'intérieur du moule, rendant un ébavurage du corps de moule inutile et facilitant le démoulage du corps de la moule.

Selon l'invention, ce but est atteint par un procédé de fabrication d'un cathéter urinaire selon la revendication 1.

On utilise pour le procédé selon l'invention un moule avec une cavité allongée présentant la forme de la pièce à fabriquer. Pour fabriquer un cathéter urinaire, on utilise par exemple un moule avec une cavité cylindrique de 3 mm de diamètre environ et d'une longueur allant jusqu'à plus de 40 cm. Le moule peut être cylindrique ou légèrement conique pour faciliter le démoulage de la pièce moulée.

Le moule présente une extrémité distale qui est fermée. Pour la fabrication d'un cathéter urinaire, l'extrémité distale fermée peut par exemple prendre la forme d'une coupelle arrondie. Le moule présente une ouverture au niveau de l'extrémité proximale. On peut injecter du matériau à cet endroit. En outre, la pièce moulée par injection obtenu peut y être extrait du moule.

En outre, on utilise une broche mobile le long de l'axe longitudinal du moule. La broche permet d'obtenir la cavité dans le corps creux à fabriquer et est mis à disposition au voisinage de l'extrémité proximale du moule. La broche peut se trouver totalement à l'extérieur du moule proche de son extrémité proximale, ou bien être introduit dans le moule dans la zone de l'extrémité proximale. La broche est de préférence cylindrique et peut présenter par exemple un diamètre d'environ 1 mm pour la fabrication d'un cathéter urinaire. La broche peut également être légèrement conique.

Pour réaliser le procédé selon l'invention, on injecte du matériau thermoplastique à l'état plastique dans la zone de l'extrémité proximale du moule. De plus, la broche est déplacée dans la direction de l'extrémité distale du moule.

L'injection du matériau thermoplastique et le mouvement de la broche peuvent être successifs. De préférence, l'injection du matériau thermoplastique et le déplacement de la broche sont au moins temporairement simultanés. Le matériau injecté au niveau de l'extrémité proximale du moule est avantageusement entrainé de la broche pousse dans le moule de sorte que le moule est rempli de matériau de manière régulière. La cavité est formée simultanément dans le corps à fabriquer. En particulier, on peut injecter d'abord une certaine quantité de matériau dans le moule et ensuite déplacer la broche tandis que l'on continue à injecter davantage de matériau.

Selon l'invention, la broche tourne au moins temporairement autour de son axe, en particulier pendant son mouvement, pour repartir le matériau de manière uniforme. On peut ainsi également réduire le risque de déviation latérale de la broche par rapport à l'axe du moule. Si l'on injecte un matériau thermoplastique visqueux au niveau de l'extrémité proximale sur un côté de la broche, on court le risque que le matériau injecté décale la broche mince et long vers l'autre côté et que la cavité dans le corps creux ne soit plus formée dans sa partie centrale. Cela pose notamment un problème lors de la fabrication de cathéters urinaires dans la mesure ou la cavité à mouler est très longue et présente un petit diamètre. Il faut éviter le décalage latéral de la broche à tout prix parce que la paroi très mince de la sonde pourrait être endommagée par la broche et la cavité n'est plus étanche sur le côté. Lorsque la broche tourne pendant son déplacement, le matériau injecté est reparti autour de la broche de manière hélicoïdale. Le matériau est reparti de manière uniforme sans que le mandrin ne dévie de son trajet prédéterminé.

Le mouvement de la broche est avantageusement contrôlé en fonction d'une valeur de commande. Une valeur de commande peut par exemple être la pression régnant dans le moule. Un capteur de pression peut être prévu à un endroit adapte au niveau du moule, par exemple dans la zone de l'extrémité distale.

Une pression de remplissage survient lors de l'injection de matériau. Cette pression va croitre dès que le moule est rempli de matériau. Pendant l'injection du matériau autour de la broche qui entraine le matériau en se déplaçant vers la proximité distale. Du moule, la pression devrait rester sensiblement constante. La pression va monter lorsque l'on injecte plus de matériau que le déplacement de la broche ne peut gérer. Le mouvement de la broche et/ou la quantité de matériau injectée peuvent être contrôlés comme il convient pour garder la pression constante.

Si un capteur de pression est disposé au niveau de l'extrémité distale du moule, la courbe de pression peut renseigner que le matériau injecté est arrivé à l'extrémité distale du moule. La pression va alors monter.

Le mouvement de la broche peut également être contrôlé en fonction du volume de matériau injecté de sorte que la broche se trouve toujours à l'endroit voulu par rapport au volume de matériau injecté se dilatant dans le moule.

Le mouvement de la broche peut également dépendre du temps de sorte que l'on peut coordonner la quantité de matériau injectée et la position de la broche sans que les deux paramètres n'influent l'un sur l'autre de manière directe.

Une valeur de commande peut aussi être la température du matériau injecté. Plus la température du matériau est élevée, plus le matériau est plastique. Le déplacement de la broche, notamment la vitesse de déplacement, peut être contrôlé en fonction de la température. Le retrait de la broche peut être déclenché après refroidissement suffisant pour ne pas déformer la pièce injectée.

Toutes les variantes de commande de la broche citées précédemment peuvent être utilisées seules ou dans n'importe quelle combinaison.

Dans un mode de réalisation du procédé selon l'invention, le moule présente une ou plusieurs ouvertures fermables au niveau de son extrémité distale. La ou les ouvertures peuvent être ouvertes au début de l'opération d'injection pour expurger l'air se trouvant dans le moule. Les ouvertures sont refermées vers la fin de l'opération d'injection de sorte que le corps moule à fabriquer peut prendre la forme désirée au niveau de l'extrémité distale. L'opération de fermeture peut être contrôlée de manière similaire au mouvement de la broche, par exemple par détection de la pression dans le moule, en fonction du volume de matériau injecté ou en fonction du temps.

Selon un autre mode de réalisation de l'invention, le moule dispose d'un insert mobile qui peut se déplacer d'une position proximale vers une position distale pendant l'opération d'injection. L'insert peut être conçu pour se déplacer à l'intérieur de la cavité du moule, sous forme de fond mobile, notamment si la cavité est cylindrique. L'insert peut adopter une position proximale au voisinage de l'extrémité proximale du moule au début de l'opération d'injection. Le volume d'air à l'intérieur du moule à refouler pendant l'opération d'injection peut être minimisé. Pendant l'injection du matériau, l'insert se déplace dans la direction distale avec l'arrivée de matériau et libère successivement la cavité allongée du moule.

Le mouvement de l'insert peut être contrôlé en fonction de la pression, du temps et/ou du volume de matériau injecté ou bien sans commande externe, simplement par la pression que le du matériau injecté exerce sur l'insert.

L'invention est expliquée plus précisément ci-après à l'aide des figures ci-jointes :
- **Les Figures 1a à 1e**: montrent schématiquement différentes phases du procédé conforme à l'invention pour fabriquer un cathéter urinaire en coupe transversal d'un dispositif de moulage par injection approprié ;
- **La Figure 2**: montre un exemple de réalisation du procédé conforme à l'invention en utilisant un moule avec une ouverture obturable au niveau de son extrémité distale ;
- **Les Figures 3a à 3c**: montrent un exemple de réalisation du procédé conforme à l'invention en utilisant un moule avec un insert mobile ;

L'homme de l'art comprendra facilement que les dessins représentés ici doivent servir exclusivement à illustrer le principe de l'invention et ne traduisent l'invention que schématiquement. Ils ne sont pas à l'échelle et n'englobent pas tous les composants nécessaires d'un dispositif permettant de réaliser le procédé conforme à l'invention. Les dimensions et rapports dimensionnels effectifs de même que toutes les cotes nécessaires peuvent être définis par l'homme de l'art sur la base de son expérience.

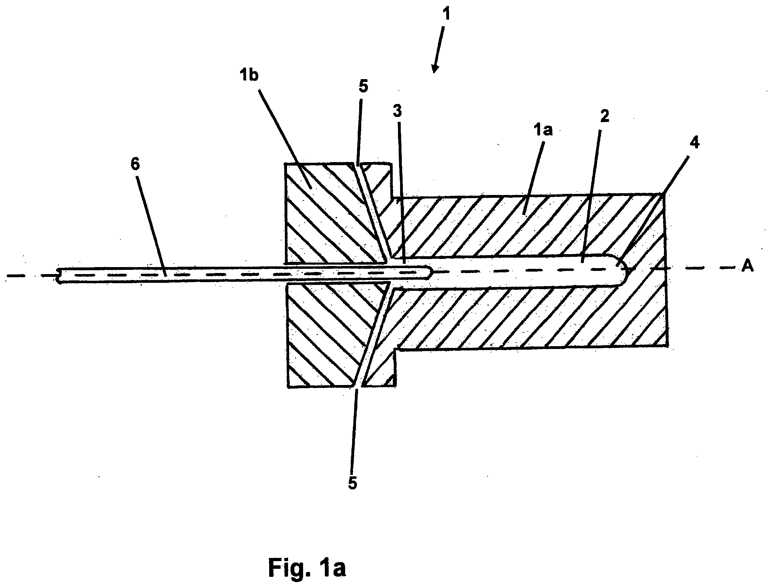

La **figure 1a** représente un moule **1** en coupe longitudinale présentant une cavité cylindrique **2,** allongée le long d'un axe **A** avec les contours externes d'un cathéter urinaire. Le moule **1** se compose d'une forme de sonde **1a,** qui présente une extrémité proximale ouverte **3** et une extrémité distale fermée **4.** La partie de moule **1a** peut être refermée par la partie de moule **1b**.

Les canaux **5** sont intégrés dans la partie de moule **1b** pour l'injection d'un matériau thermoplastique. La cavité **2** de la partie de moule **1a** est mise sous pression avec un matériau thermoplastique en phase plastique à travers les deux canaux **5.**

De plus, le dispositif contient une broche cylindrique allongé **6,** mobile le long de l'axe **A.** La broche **6** est dimensionnée de sorte qu'elle définit la cavité interne du cathéter à obtenir. L'extrémité libre de la broche **6** se trouve au début du procédé de fabrication dans la zone de l'extrémité proximale **3** de la partie de moule **1a** et une courte longueur de celle-ci est insérée dans la cavité **2** du moule.

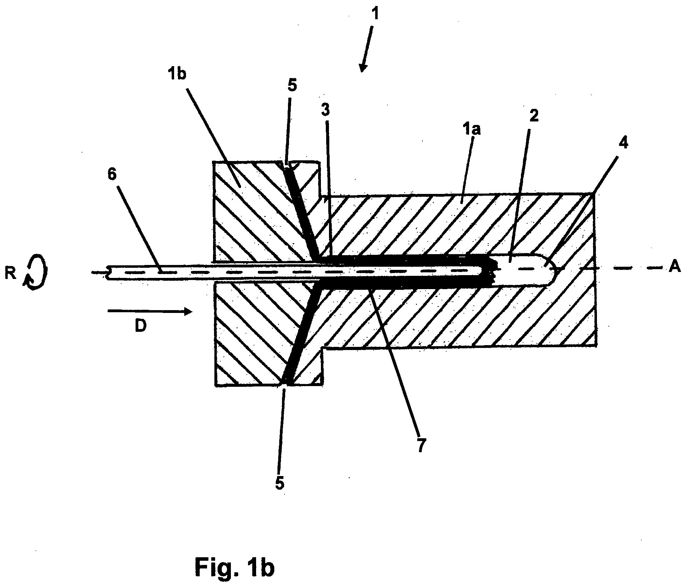

La **figure 1b** représente un stade de procédé dans lequel un premier volume du matériau thermoplastique **7** est injecté sous pression dans la cavité **2** de la partie de moule **1a**. Pendant l'injection, la broche **6** se déplace simultanément dans la direction de la flèche **D** vers l'extrémité distale **4** du moule. Cela permet que la broche **6** entraine le matériau injecté **7** au niveau de l'extrémité proximale **3** de la partie de moule **1a.** Le matériau est amené de la broche dans la cavité allongée **2** du moule **1.** La broche **6** tourne en outre autour de son axe, comme le montre la flèche **R,** pour permettre une répartition uniforme du matériau **7.**

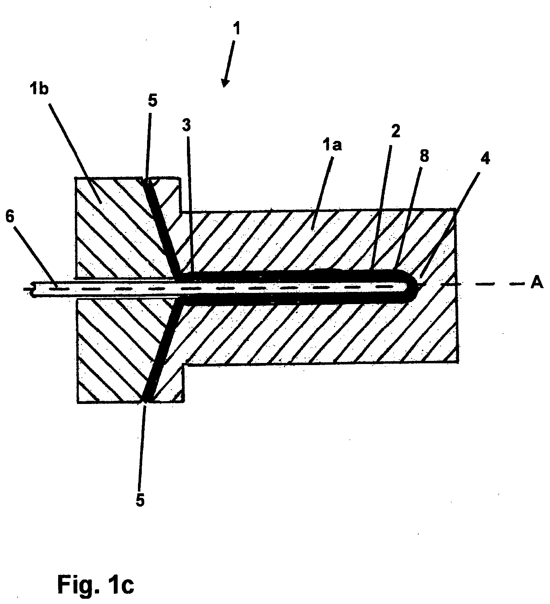

La **figure 1c** représente le stade de procédé dans lequel le cathéter urinaire **8** est formé complètement. Par rapport au stade représente sur la figure **1b****,** la quantité de matériau nécessaire pour la fabrication du cathéter est maintenant injectée La broche **6** est déplacée dans la direction de l'extrémité distale **5** du moule **1** de sorte que la cavité du cathéter urinaire **8** s'est formée. Le matériau thermoplastique peut alors refroidir et perd ses propriétés plastiques.

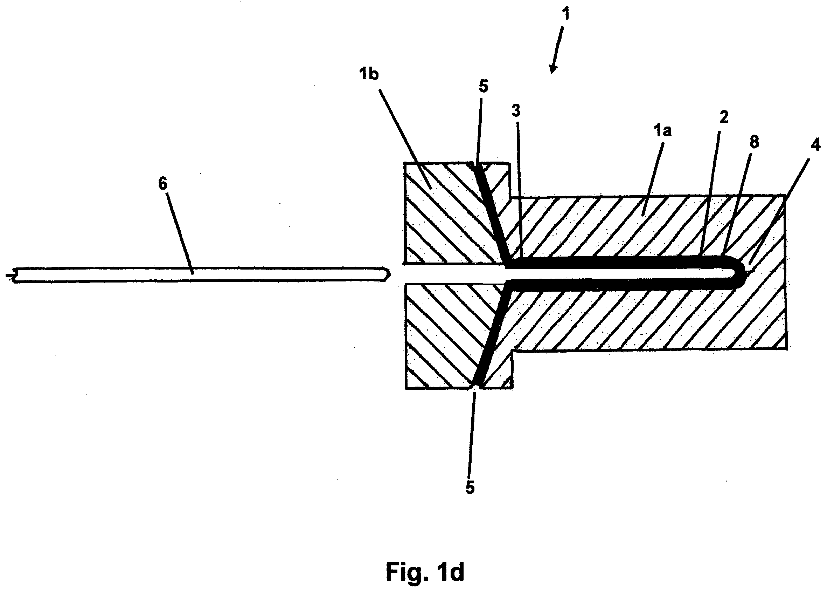

La **figure 1d** montre le stade de démoulage dans lequel on retire la broche **6** du moule **1** après refroidissement du matériau thermoplastique. Le mouvement rotatif de la broche **6** facilite l'extraction de la broche **6** par rapport au matériau injecté. Le cathéter brut **8** reste ensuite dans la partie de moule **1b.**

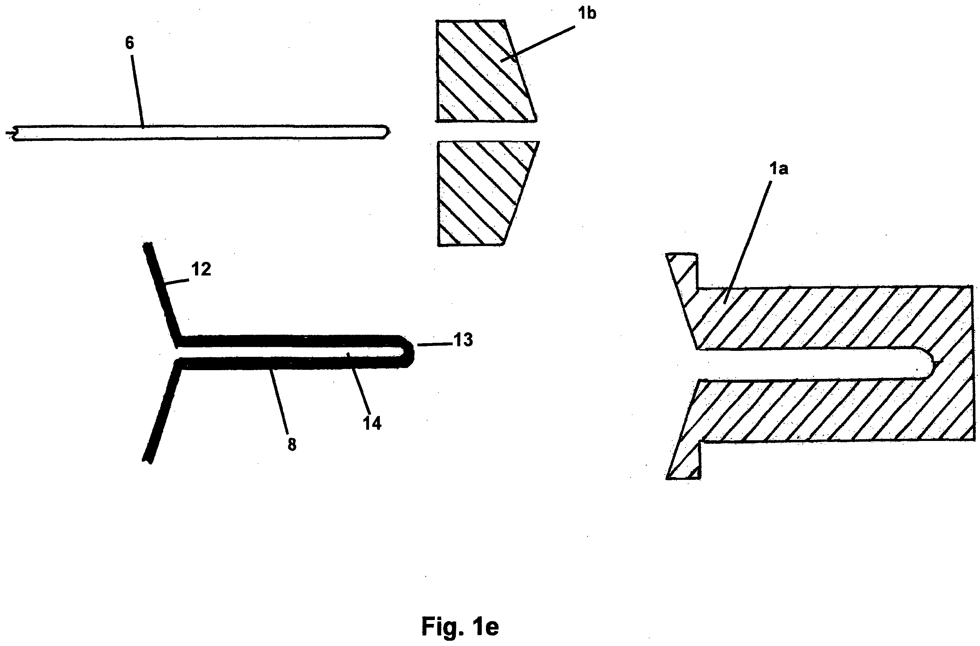

La **figure 1e** montre le cathéter brut **8** dégagé du moule, La coulée **12** doit encore être retirée. En outre, des oeillets latéraux doivent être placés comme il convient dans la pointe du cathéter **13** pour ménager un accès au canal interne **14.**

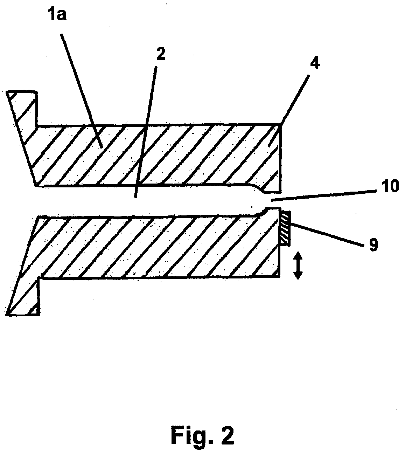

La figure **2** montre une partie **1a** d'un moule, présentant au niveau de son extrémité distale **4** une ouverture **10** pouvant être fermée à l'aide d'un poussoir **9.** Tout autre mécanisme de fermeture approprié peut également être utilisé. L'ouverture **10** s'ouvre au début du procédé d'injection de sorte que l'air contenu dans la cavité **2** du moule peut s'échapper à travers l'ouverture **10** pendant l'injection du matériau dans le moule.

Si le moule est complétement rempli de matériau, l'ouverture **10** est refermée à l'aide du poussoir **9.** Le moment de la fermeture peut être déterminé de différentes façons. On peut mesurer la montée en pression dans le moule à l'aide d'un capteur. La pression monte dès que le moule est complétement rempli et le matériau s'écoule à travers l'ouverture **10.** Plus l'ouverture **10** sélectionnée est petite, plus la montée en pression est élevée.

On peut également déterminer le moment de la fermeture de l'ouverture **10** en fonction du volume de matériau injecté. Un capteur peut également détecter le moment auquel le matériau sort de l'ouverture **10,** et peut ensuite refermer l'ouverture.

Le procédé de démoulage peut également être facilité si l'on ouvre la fermeture 1O dans la mesure où il ne se crée pas de vide dans le moule et la sortie du cathéter forme sera compromise. De plus, le démoulage peut être facilité par l'application d'air comprimé ou bien à l'aide de moyens mécaniques, comme un mandrin insert dans l'ouverture pour chasser le cathéter du moule.

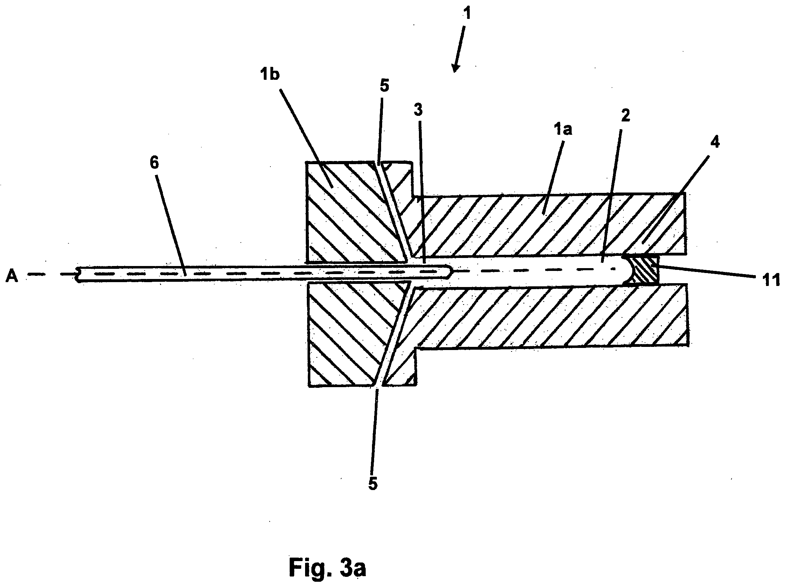

La **figure 3a** montre schématiquement un moule **1** avec un insert mobile **11** au niveau de l'extrémité distale **4** du moule. L'insert **11** prend la forme d'un cylindre avec le diamètre de la cavité **2** du moule de sorte qu'il est mobile le long de la cavité.

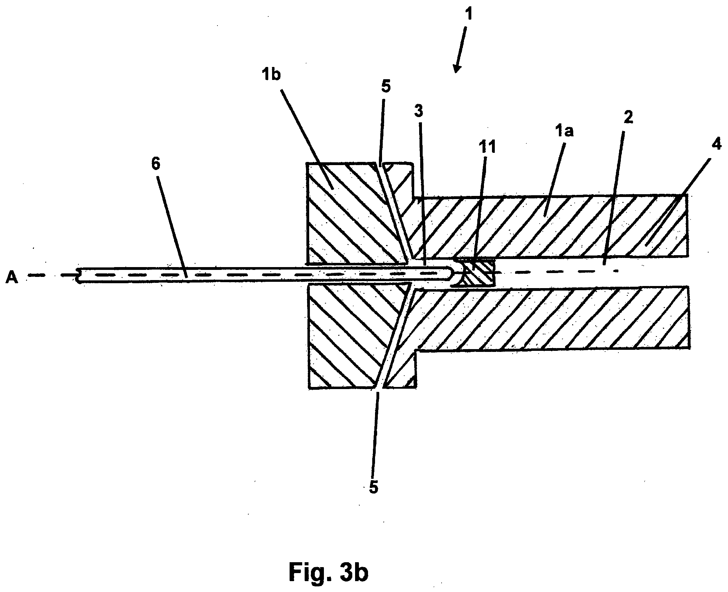

Comme cela est représenté sur la **Figure 3b****,** l'insert **11** du moule peut être déplacé au début de l'opération d'injection dans la direction de l'extrémité proximale **3** du moule, pour se retrouver à proximité de la broche **6.**

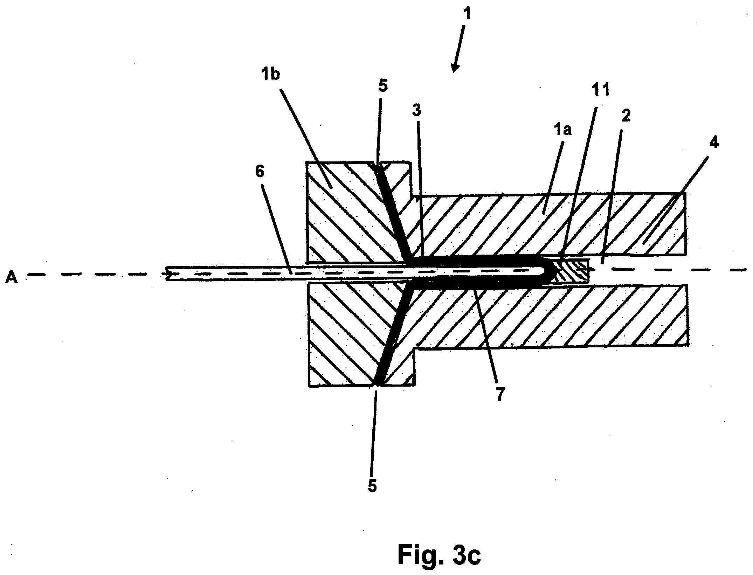

Pendant l'opération d'injection, l'insert **11** et la broche **6** sont déplacés ensemble dans la direction de l'extrémité distale **4** du moule pendant qu'on continue à injecter du matériau dans le moule comme le représente la **figure 3c****.** Le volume d'air situe dans le moule au début du procédé de moulage est très minime et est refoulé complétement au début de l'opération d'injection. L'introduction du matériau thermoplastique **7** dans le moule est soutenue par le mouvement de l'insert mobile **11** et la broche **6,** également mobile, et est reparti de manière uniforme dans le moule.

## Revendications

1. Procédé de fabrication d'un cathéter urinaire, par moulage par injection d'un matériau thermoplastique dans un moule (1), comprenant les étapes suivantes:
- mise à disposition d'un moule (1) avec une cavité (2) allongée, orientée le long d'un axe longitudinal (A), qui présente une extrémité proximale ouverte (3) et une extrémité distale fermée (4);
- mise à disposition d'une broche (6) à proximité de l'extrémité proximale (3) du moule (1), mobile le long de l'axe longitudinal (A) du moule ;
- injection d'un matériau thermoplastique à l'état plastique dans la région de l'extrémité proximale (3) du moule (1);
- déplacement de la broche (6) dans la direction de l'extrémité distale (4) du moule (1) ;
dans lequel la broche (6) tourne au moins temporairement autour de son axe.

2. Procédé selon la revendication 1, **caractérisé en ce que** l'injection du matériau thermoplastique et le déplacement de la broche (6) sont au moins temporairement simultanés.

3. Procédé selon l'une des revendications 1 à 2, **caractérisé en ce que** le déplacement de la broche (6) est commandé en fonction d'une valeur de commande, en particulier en fonction de la pression dans le moule et/ou du volume de matériau injecté et/ou du temps et/ou de la température du matériau injecté.

4. Procédé selon l'une des revendications 1 à 3, **caractérisé en ce que** le moule (1) présente au niveau de son extrémité distale (4) au moins une ouverture (10) fermable qui s'ouvre au début de l'opération d'injection et se referme vers la fin de l'opération d'injection.

5. Procédé selon l'une des revendications 1 à 4, **caractérisé en ce que** le moule (1) dispose d'un insert mobile (11) qui peut se déplacer d'une position proximale vers une position distale pendant l'opération d'injection.

6. Procédé selon la revendication 5, **caractérisé en ce que** l'insert mobile (11) du moule se déplace en fonction de la position de la broche (6).

7. Procédé selon l'une des revendications 1 à 6, **caractérisé en ce que** la cavité (2) du moule (1) et/ou la broche (6) sont cylindriques ou légèrement coniques avec le diamètre réduit au niveau de l'extrémité distale respective.

## Patentansprüche

1. Verfahren zur Herstellung eines Harnkatheters, durch Spritzgießen eines thermoplastischen Materials in eine Form (1), umfassend die folgenden Schritte:
- Bereitstellen einer Form (1) mit einem länglichen, entlang einer Längsachse (A) ausgerichteten Hohlraum (2), der ein offenes proximales Ende (3) und ein geschlossenes distales Ende (4) aufweist;
- Bereitstellen einer Spindel (6) in der Nähe des proximalen Endes (3) der Form (1), beweglich entlang der Längsachse (A) der Form;
- Einspritzen eines thermoplastischen Materials in plastischen Zustand in den Bereich des proximalen Endes (3) der Form (1);
- Bewegen der Spindel (6) in Richtung des distalen Endes (4) der Form (1);
wobei sich die Spindel (6) zumindest vorübergehend um Ihre Achse dreht.

2. Verfahren nach Anspruch 1, **dadurch gekennzeichnet, dass** das Einspritzen des thermoplastischen Materials und das Bewegen der Spindel (6) zumindest zeitweise gleichzeitig erfolgen.

3. Verfahren nach einem der Ansprüche 1 bis 2, **dadurch gekennzeichnet, dass** die Bewegung der Spindel (6) in Abhängigkeit von einem Steuerwert gesteuert wird, insbesondere in Abhängigkeit vom Druck in der Form und/oder dem Volumen des eingespritzten Materials und/oder der Zeit und/oder Temperatur des eingespritzten Materials.

4. Verfahren nach einem der Ansprüche 1 bis 3, **dadurch gekennzeichnet, dass** die Form (1) an ihrem distalen Ende (4) mindestens eine verschließbare Öffnung (10) aufweist, die sich zu Beginn des Einspritzvorgangs öffnet und gegen Ende des Einspritzvorgangs schließt.

5. Verfahren nach einem der Ansprüche 1 bis 4, **dadurch gekennzeichnet, dass** die Form (1) einen beweglichen Einsatz (11) aufweist, der sich während des Einspritzvorgangs von einer proximalen in eine distale Position bewegen kann.

6. Verfahren nach Anspruch 5, **dadurch gekennzeichnet, dass** sich der bewegliche Einsatz (11) der Form in Abhängigkeit von der Position der Spindel (6) bewegt.

7. Verfahren nach einem der Ansprüche 1 bis 6, **dadurch gekennzeichnet, dass** der Hohlraum (2) der Form (1) und/oder die Spindel (6) zylindrisch oder leicht konisch sind, wobei der Durchmesser am jeweiligen distalen Ende reduziert ist.

## Claims

1. Method for manufacturing a urinary catheter, by injection moulding a thermoplastic material in a mould (1), comprising the following steps:
- providing a mould (1) with an elongated cavity (2), oriented along a longitudinal axis (A), which has an open proximal end (3) and a closed distal end (4);
- providing a pin (6), in the vicinity of the proximal end (3) of the mould (1), that can move along the longitudinal axis (A) of the mould;
- injecting a thermoplastic material in a plastic state into the region of the proximal end (3) of the mould (1);
- moving the pin (6) towards the distal end (4) of the mould (1);
wherein the pin (6) rotates at least temporarily about its axis.

2. Method according to claim 1, **characterised in that** injecting the thermoplastic material and moving the pin (6) are at least temporarily simultaneous.

3. Method according to any one of claims 1 to 2, **characterised in that** moving the pin (6) is controlled according to a control value, in particular according to the pressure in the mould and/or to the volume of injected material and/or to time and/or to the temperature of the injected material.

4. Method according to any one of claims 1 to 3, **characterised in that** the mould (1) has, at its distal end (4), at least one closable opening (10), which opens at the start of the injection operation and closes towards the end of the injection operation.

5. Method according to any one of claims 1 to 4, **characterised in that** the mould (1) has a movable insert (11) which can move from a proximal position to a distal position during the injection operation.

6. Method according to claim 5, **characterised in that** the movable insert (11) of the mould moves according to the position of the pin (6).

7. Method according to any one of claims 1 to 6, **characterised in that** the cavity (2) of the mould (1) and/or the pin (6) are cylindrical or slightly conical with the reduced diameter at the respective distal end.
